# EUROPEAN PATENT APPLICATION

(11) **EP 3 714 689 A1**
(43) Date of publication of application: **30.09.2020**
(21) Application number: 19165385.6
(22) Date of filing: 27.03.2019
(51) Int. Cl.: A01M 7/00

(54) **APPARATUS FOR INSECT CONTROL**

(71) Applicant: Bayer Aktiengesellschaft, 51373 Leverkusen (DE)
(72) Inventor: Faers, Malcolm, 40597 Düsseldorf (DE); Chapple, Andrew Charles, 40764 Langenfeld (DE)
(74) Representative: BIP Patents

(57) **Abstract**

The present invention relates to apparatus (10) for insect control, comprising an input unit (20), a processing unit (30), and an output unit (40). The input unit is configured to provide the processing unit with a plurality of sound data at a corresponding plurality of locations in an environment. The plurality of sound data were acquired by at least one microphone (50). The processing unit is configured to determine at least one location of the plurality of locations for the application of an insecticide. The determination comprises utilization of the plurality of sound data. The output unit is configured to output information relating to the at least one location of the plurality of locations.

## Description

### FIELD OF THE INVENTION

The present invention relates to an apparatus for insect control, a vehicle for insect control, and a method for insect control, as well as to a computer program element.

### BACKGROUND OF THE INVENTION

The general background of this invention is the control of insects in an agricultural field. Farmers wish to encourage beneficial insects, such as bees in a crop field, whilst at the same time controlling pest insects that are detrimental to the crop. These requirements can be contradictory when it comes to spraying the crop with an insecticide, and there is also the complicating factor that there is a desire to reduce the overall chemical use in the field. Furthermore, insects can be hidden in the foliage of crop plants, making it difficult for a farmer to determine if spraying is required or if to do so may affect a population of beneficial insects that the farmer wishes to protect.

### SUMMARY OF THE INVENTION

It would be advantageous to have improved means for the control of insects in an agricultural field.

The object of the present invention is solved with the subject matter of the independent claims, wherein further embodiments are incorporated in the dependent claims. It should be noted that the following described aspects and examples of the invention apply also for the apparatus for insect control, the vehicle for insect control, and the method for insect control, and for the computer program element and computer readable medium.

In a first aspect, there is provided an apparatus for insect control, comprising:
- an input unit;
- a processing unit; and
- an output unit.

The input unit is configured to provide the processing unit with a plurality of sound data at a corresponding plurality of locations in an environment, wherein the plurality of sound data were acquired by at least one microphone. The processing unit is configured to determine at least one location of the plurality of locations for the application of an insecticide. The determination comprises utilization of the plurality of sound data. The output unit is configured to output information relating to the at least one location of the plurality of locations.

In other words, sound data of for example a field can be acquired and a decision can then be made to spray a location, or not to spray the location, with an insecticide based on an analysis of sound acquired from that location.

In this way, insect infestation can be detected and addressed through application of an insecticide even when the insects cannot be seen, for example when they are hidden by foliage or when they are in the ground and eating parts of the root system of a plant, or during periods of time when it is dark (dawn or dusk or at night) but when insects are active.

Also, beneficial insects can be detected and allowed to remain unharmed in the environment.

In this manner, beneficial insects can be maintained and encouraged, whilst detrimental insects (pests) controlled with a reduction in the use of chemicals. This also leads to cost savings and efficiency improvement, because not all locations in a field have to be sprayed with an insecticide, only those locations with insects that have been identified as pests, rather than being of benefit.

Additionally, in this manner the societal appreciation of modern farming practices is enhanced because insects that are detrimental are controlled whilst at the same time beneficial insects are spared and encouraged, and this is also more likely to lead to acceptance of modern farming practices in society.

In an example, determination of the at least one location comprises analysis of at least some of the plurality of sound data to determine that at least one insect is located at the at least one location of the plurality of locations.

Thus, locations in a field or other environment, where there are insects that need to be controlled, can be sprayed with an insecticide.

In an example, determination of the at least one location comprises analysis of the at least some of the plurality of sound data to determine at least one type of insect.

In this manner, the insecticide to be sprayed can take into account the specific insects to be found in different areas or locations, enabling targeted control to be provided.

In an example, analysis of the at least some of the plurality of sound data comprises utilization of a trained machine learning algorithm.

In an example, the at least one microphone comprises at least two microphones.

In this manner, one microphone can be used as part of a noise reduction system and/or increased location accuracy can be provided. Thus, in effect one microphone can be used to pick up background sound data for example noise associated with a platform with microphones such as a vehicle that is moving around the environment acquiring sound data, and this background sound data can be subtracted from the sound data of interest to increase the signal to noise of sound data that has insect noise sound data.

In an example, the at least one microphone comprises at least three microphones.

In this manner, one microphone can be used as part of a noise reduction system and/or increased location accuracy can be provided including the ability to triangulate the detection of the source of sound to pinpoint where an insect is to be found. This enables individual plants, or even parts of plants to be sprayed.

In an example, utilization of the plurality of sound data comprises utilization of a noise reduction algorithm.

In this manner, noise generated by the platform, such as a vehicle, with the at least one microphone can use existing noise reduction algorithms, that operate for example in smart phone and noise reduction headphones, to reduce the effects of noise associated with that platform in order to increase the signal to noise associated with sounds from insects.

In an example, the plurality of sound data comprises at least one noise signature of a vehicle, and an input to the noise reduction algorithm can comprise the at least one noise signature of the vehicle.

In an example, the at least one microphone comprises a plurality of microphones, and one or more microphones of the plurality of microphones can have acquired the at least one noise signature of the vehicle.

In a second aspect, there is provided a vehicle for insect control, comprising:
- at least one microphone;
- a processing unit; and
- an output unit.

The vehicle is configured to travel to a plurality of locations in an environment. The at least one microphone is configured to acquire a plurality of sound data at the plurality of locations. The processing unit is configured to determine at least one location of the plurality of locations for the application of an insecticide. The determination comprises utilization of the plurality of sound data. The output unit is configured to output information relating to the at least one location of the plurality of locations.

In an example, the vehicle comprises a reservoir configured to hold a liquid insecticide and comprises a spray unit. The processing unit is configured to control the spray unit to spray the liquid insecticide at the at least one location.

In an example, the vehicle comprises one or more sound collector associated with one or more microphone of the at least one microphone.

In this way the microphones can be made directional microphones, where they preferentially detect sounds coming from certain directions and do not collect sounds coming from other directions. In this way, the signal to noise ration of insect sounds, that are expected to come from the ground or close to the ground in crops in a known direction with respect to the vehicle, can be increased through maximising the collection of sounds from these directions whilst minimising the collection of sounds from other directions. Thus, for example a microphone or more than one microphone can be mounted on an unmanned aerial vehicle for example, and directed to collect sound from an area in front of the UAV and not collect sound from other directions. In this way, the collection of sound from the rotor blades that is directed generally downwards directly below the UAV can be minimised and wind sound from all around, such as the sound of moving crop plants can be minimised. However, sound from a small region in front of the UAV can be collected, and if necessary noise reduction algorithms can also be utilized, to further increase the signal to noise in order that insects can be detected and identified.

In an example, the vehicle comprises at least one acoustic damper and/or deflector associated with the at least one microphone.

In this way, noises from the vehicle can be stopped (or reduced) from being detected by the at least one microphone, thereby increasing the signal to noise of insect sounds detected.

In a third aspect, there is provided a method for insect control, comprising:
a) providing a plurality of sound data acquired at a corresponding plurality of locations in an environment, wherein the plurality of sound data were acquired by at least one microphone;
b) determining at least one location of the plurality of locations for the application of an insecticide, the determination comprising utilizing the plurality of sound data; and
d) outputting information relating to the at least one location of the plurality of locations.

According to another aspect, there is provided a computer program element for controlling the apparatus of the first aspect, and/or the system according to the second aspect, which when executed by a processor is configured to carry out the method of the third aspect.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of an apparatus for insect control;
Fig. 2 shows a schematic set up of an example of a system for insect control;
Fig. 3 shows a schematic representation of a robotic unmanned aerial vehicle acquiring sound data within a field and spraying specific locations where particular types of insect are to be found;
Fig. 4 shows a schematic representation of a robotic unmanned aerial vehicle acquiring sound data within a field;
Fig. 5 shows an example of a microphone array; and
Fig. 6 shows a schematic representation of a ground vehicle acquiring sound data within a field and spraying specific locations where particular types of insect are to be found.

### DETAILED DESCRIPTION OF EMBODIMENTS

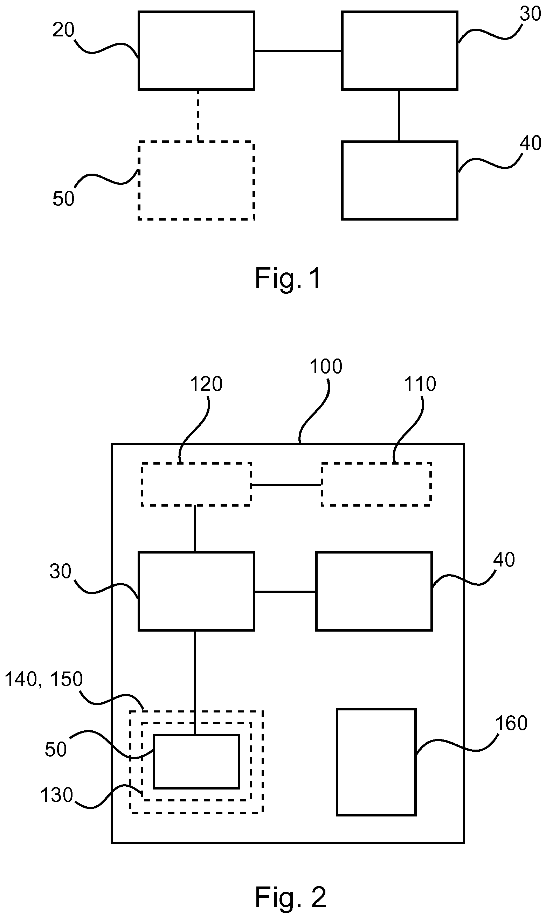

Fig. 1 shows an example of an apparatus 10 for insect control. The apparatus comprises an input unit 20, a processing unit 30, and an output unit 40. The input unit is configured to provide the processing unit with a plurality of sound data at a corresponding plurality of locations in an environment. The plurality of sound data were acquired by at least one microphone 50. The processing unit is configured to determine at least one location of the plurality of locations for the application of an insecticide. The determination comprises utilization of the plurality of sound data. The output unit is configured to output information relating to the at least one location of the plurality of locations.

In an example, the apparatus is operating in real-time, where sound data are acquired and immediately processed and a decision is immediately made to spray a location such as a plant or not to spray the location, and if the location is to be sprayed the spray gun (also termed a spray unit) is immediately used to spray the location, and if the location is not to be sprayed the spray gun is not activated. Thus, for example a vehicle can acquire sound data of its environment and process that sound data to determine if a location/plant is to be sprayed or not. Thus, for example a UAV can fly around a field and acquire sound data and determine if plants should be sprayed or not, via a spray gun located on the UAV, because of the presence of pest insects in the former or because of absence of pest insects or the presence of beneficial insects in the latter. Thus, for example a robotic land vehicle can move around a field and acquire sound data and similarly determine if locations such as plants should be sprayed or not, via a spray gun located on the robotic land vehicle, because of the detection of insects or absence of insects based on sound data.

In an example, the apparatus is operating in quasi real time, where sound data are acquired in a field and immediately processed to determine if locations/plants should be sprayed or not. That information can later be used by an appropriate system (or systems) that travel(s) within the field and uses its spray gun to spray some locations and not spray other locations based on whether insects that need to be controlled are to be found. Thus for example, a first vehicle, such as an unmanned aerial vehicle (UAV) or drone equipped with one or more microphones can travel within a field and acquire sound data. This sound data can be immediately processed to determine which locations should be sprayed because certain insects are found there, with the other crop plants left alone because no insects are to be found there or beneficial insects are there. Thus in effect a "spray map" is generated detailing the locations that need to be sprayed with an insecticide. Later, a vehicle equipped with a spray gun or several spray guns that can spray insecticide can travel within the field and spray the locations that were previously determined to need to be sprayed. Thus for example, a UAV with a chemical spray gun then flies to the location of the weeds that have certain insects that need to be controlled and sprays the weeds, or a robotic land vehicle travels within the field and uses its chemical spray gun and applies the insecticide to the locations that have been determined to require to be sprayed.

In an example, the apparatus is operating in an offline mode. Thus, sound data that has previously been acquired is provided later to the apparatus. The apparatus then processes the sound data and determines which locations in the field should be sprayed with an insecticide because certain insects are found there, to in effect generate a spray map of specific plants and their locations that need to be sprayed. The spray map is then used later by one or more vehicles that then travel within the field and activate their spray guns at the locations of the plants that need to be sprayed, using the spray map, to manage insects in the field.

According to an example, the determination of the at least one location comprises analysis of at least some of the plurality of sound data to determine that at least one insect is located at the at least one location of the plurality of locations.

According to an example, the determination of the at least one location comprises analysis of the at least some of the plurality of sound data to determine at least one type of insect.

In an example, the determination of the at least one location comprises analysis of at least some of the plurality of sound data to determine a number of insects located at the at least one location.

In an example, the determination of the at least one location comprises analysis of at least some of the plurality of sound data to determine a number of at least one type of insect located at the at least one location.

In this way, if a large number of beneficial insects are found at a location for example on a plant, then a decision can be made not to spray the location/plant with an insecticide even if detrimental insects are also present. Also, if only one or a few detrimental insects are found on a plant, a decision can be made not to spray the plant with an insecticide in order to reduce the amount of insecticide used.

Further details on insect detection and classification based on the sounds they emit can be found for example in the paper by Y. Chen et al: Journal of Visualized Experiments, October 2014, pages 1-9, and the paper by R. W. Mankin et al: 16th International congress on acoustics, 1998, Seattle, WA, Meeting Acoustical Society of America, 2, 685-686 1998, and the paper by D.R. Raman et al: Transactions of the ASABE vol. 50(4). 1481-1485 (2007), and the paper by R.W. Mankin et al: American Entomologist, vol 57(1). 30-44 (2011).

In an example, the processing unit is configured to determine at least one non-application location of the plurality of locations for the non-application of the insecticide, the determination comprising utilization of the plurality of sound data.

In this manner, beneficial insects that are to be found in an environment can be allowed to remain and not be sprayed.

Also, locations where no insect sounds are to be found can also be set aside from being sprayed.

In an example, determination of the at least one non-application location comprises analysis of the at least some of the plurality of sound data to determine at least one type of insect.

Thus, beneficial insects, such as for examples bees or insects that predate on pest insects and/or are helpful pollinators, can be identified from the sounds associated with those insects, and there areas and/plants where they are located be identified as locations not to be sprayed.

According to an example, analysis of the at least some of the plurality of sound data comprises utilization of a trained machine learning algorithm.

In an example, the trained machine learning algorithm has been trained on the basis of a plurality of sound data associated with at least one type of insect.

In an example, the trained machine learning algorithm has been trained on the basis of a plurality of sound data associated with a plurality of types of insect

According to an example, the at least one microphone comprises at least two microphones.

According to an example, the at least one microphone comprises at least three microphones.

In an example, the at least one microphone comprises at least four microphones.

In this manner, one microphone can be used as part of a noise reduction system and/or increased location accuracy can be provided including the ability to triangulate the detection of the source of sound in a non-ambiguous manner to pinpoint where an insect is to be found. This enables individual plants, or even parts of plants to be sprayed.

According to an example, utilization of the plurality of sound data comprises utilization of a noise reduction algorithm.

Further information on noise reduction can be found for example in the paper by R. Bentler and L-K. Chiou, Trends in Amplification vol. 10(2) 67-82 (2006), in US8942976B2, in US6717991B1 and in US5917921.

According to an example, the plurality of sound data comprises at least one noise signature of a vehicle, and wherein an input to the noise reduction algorithm comprises the at least one noise signature of the vehicle.

According to an example, the at least one microphone comprises a plurality of microphones, and wherein one or more microphones of the plurality of microphones acquired the at least one noise signature of the vehicle.

Fig. 2 shows an example of a vehicle 100 for insect control. Essential features are shown in bold lines, and optional features are shown in dashed lines. The vehicle comprises at least one microphone 50, a processing unit 30, and an output unit 40. The vehicle is configured to travel to a plurality of locations in an environment. The at least one microphone is configured to acquire a plurality of sound data at the plurality of locations. The processing unit is configured to determine at least one location of the plurality of locations for the application of an insecticide, the determination comprising utilization of the plurality of sound data. The output unit is configured to output information relating to the at least one location of the plurality of locations.

In an example, determination of the at least one location comprises analysis of at least some of the plurality of sound data to determine that at least one insect is located at the at least one location of the plurality of locations.

In an example, determination of the at least one location comprises analysis of the at least some of the plurality of sound data to determine at least one type of insect.

In an example, the processing unit is configured to determine at least one non-application location of the plurality of locations for the non-application of the insecticide, the determination comprising utilization of the plurality of sound data.

In an example, analysis of the at least some of the plurality of sound data comprises utilization of a trained machine learning algorithm.

In an example, the trained machine learning algorithm has been trained on the basis of a plurality of sound data associated with at least one type of insect.

In an example, the trained machine learning algorithm has been trained on the basis of a plurality of sound data associated with a plurality of types of insect
In an example, the at least one microphone comprises at least two microphones.

In an example, the at least one microphone comprises at least three microphones.

In an example, the at least one microphone comprises at least four microphones.

In an example, utilization of the plurality of sound data comprises utilization of a noise reduction algorithm.

In an example, the plurality of sound data comprises at least one noise signature of a vehicle, and wherein an input to the noise reduction algorithm comprises the at least one noise signature of the vehicle.

In this way, a noise signature of a vehicle that acquires sound data used to locate and if necessary identify insects can be acquired, and utilized in a noise reduction algorithm in order to improve signal to noise of the insect sounds.

In an example, the at least one microphone comprises a plurality of microphones, and wherein one or more microphones of the plurality of microphones acquired the at least one noise signature of the vehicle.

Thus, for example a pre-recorded sound signature of a vehicle can be utilized as part of a noise reduction process. Or, a microphone can be used to acquire a sound signature of the vehicle in real time in order to effect noise reduction by an appropriate algorithm. Indeed, also a pre-recorded noise signature of the vehicle can be used in combination with real-time microphone acquired noise signatures. Thus, sound laboratory quality noise signatures (ideal) for a vehicle operating in a number of different ways can be recorded, and then a microphone can record sounds generated by the vehicle. Knowledge of the ideal noise signature, along with that actually recorded, can be used to improve noise cancellation algorithms. In an example, the vehicle comprises a sensor configured to monitor the drive system of the vehicle, such as a revolution rate of a motor of the vehicle such as a motor or engine that drives rotor blades of an unmanned aerial vehicle. Then, ideal noise signatures of the vehicle can be pre-recorded for various motor or engine revolution rates, and the appropriate noise signature can be utilized based on sensor data that determines the actual revolution rate of the motor or engine when the vehicle used one or more microphones to acquire sound data from which insect sounds can be determined and from which types of insect can be determined.

According to an example, the vehicle comprises a reservoir 110 configured to hold a liquid insecticide and comprises a spray unit 120. The processing unit is configured to control the spray unit to spray the liquid insecticide at the at least one location.

According to an example, the vehicle comprises one or more sound collector 130 associated with one or more microphone of the at least one microphone.

In an example, the each one of the one or more sound collector is a parabolic sound collector.

According to an example, the vehicle comprises at least one acoustic damper 140 and/or deflector 150 associated with the at least one microphone.

In an example, one or more of the at least one acoustic damper is situated between a drive unit 160 of the vehicle and one or more microphone of the at least one microphone.

In an example, the vehicle is an unmanned aerial vehicle. One or more of the at least one acoustic damper is situated between one or more microphone of the at least one microphone and at least one rotor blade of the vehicle 170.

In an example, the vehicle is an unmanned land vehicle, and wherein one or more of the at least one acoustic damper is situated between one or more microphone of the at least one microphone and wheels of the vehicle 180.

Thus, an example also relates to a method for insect control, the method comprising:
a) providing a plurality of sound data acquired at a corresponding plurality of locations in an environment, wherein the plurality of sound data were acquired by at least one microphone;
b) determining at least one location of the plurality of locations for the application of an insecticide, the determination comprising utilizing the plurality of sound data; and
d) outputting information relating to the at least one location of the plurality of locations.

According to an example, determination of the at least one location comprises analysis of at least some of the plurality of sound data to determine that at least one insect is located at the at least one location of the plurality of locations.

In an example, step b) comprises analysing the at least some of the plurality of sound data to determine at least one type of insect.

In an example, the method comprises step c) determining at least one non-application location of the plurality of locations for the non-application of the insecticide, the determination comprising utilizing the plurality of sound data.

In an example, determination of the at least one non-application location comprises analysing the at least some of the plurality of sound data to determine at least one type of insect.

In an example, analysis of the plurality of sound data comprises utilizing a trained machine learning algorithm.

In an example, the trained machine learning algorithm has been trained on the basis of a plurality of sound data associated with at least one type of insect.

In an example, the trained machine learning algorithm has been trained on the basis of a plurality of sound data associated with a plurality of types of insect

In an example, the at least one microphone comprises at least two microphones.

In an example, the at least one microphone comprises at least three microphones.

In an example, the at least one microphone comprises at least four microphones.

In an example, utilizing of the plurality of sound data comprises utilizing a noise reduction algorithm.

In an example, the plurality of sound data comprises at least one noise signature of a vehicle configured to acquire the plurality of sound data, and wherein an input to the noise reduction algorithm comprises the at least one noise signature of the vehicle.

In an example, the at least one microphone comprises a plurality of microphones, and wherein one or more microphones of the plurality of microphones acquired the at least one noise signature of the vehicle.

Thus, sound processing is used with sprayers, that can be precision sprayers and even ultra-precision sprayers, to enable certain locations in for example a field (such as the locations of plants), whether crop plants or weeds, to be sprayed with insecticides (including systemic insecticides) when necessary to control and manage the insects in a field, encouraging beneficial insects whilst controlling detrimental insects and doing this with a reduction in chemical use. Decisions to spray or not to spray can be based on an analysis of the sounds emitted from the different locations to determine if insects are there, and determine what types of insects are there. Thus for example beneficial insects, such as bees that mostly feed on nectar and help pollination, and which is something the farmer wants, can be encouraged to exist in the field, whilst pests such as aphids that cause damage to the crop plants by sucking sap or eating leaves or placing eggs can be are controlled.

In an example, the input unit 20 is configured to provide the processing unit 30 with at least one image of the environment. The processing unit 30 is configured to analyse the at least one image to determine information relating to at least one plant that is present at one or more locations of the plurality of locations. The determination of the at least one location for the application of the insecticide can then comprises utilization of the information relating to the at least one plant.

In this manner, if an insect has been detected to be a type of insect with a certain degree of confidence based on sound data, that determination can have its confidence level increased if the plant is identified to be one where that insect is typically found. Or conversely, in a type of insect has been found to be associated with a plant on which that insect normally does not normally feed, then a confidence level associated with the determination of the insect type can be reduced. Thus, a determination of spraying in a field can take into account the crop type in that field, and even take into account different types of weeds to be found in that field, where insects can be found.

In an example, the output unit outputs a signal that is directly useable to activate one or more spray guns.

In an example, the processing unit is configured to analyse the at least one image to identify the plant. The information relating to the plant can then comprise the identity of the plant.

In an example, the processing unit is configured to analyse the at least one image to determine if the plant is a specimen of a crop grown in the field or if the plant is a weed. The information relating to the plant can then comprise the determination of the plant belonging to the crop or the determination that the plant is a weed.

In an example, if the determination is made that the plant is a weed, the processing unit is configured to analyse the at least one image to determine a type of weed for the plant. The information relating to the plant can then comprise the determined type of weed.

In other words, it can be determined if the plant is a crop plant or is a weed, and this information used to determine if the plant should be sprayed. Furthermore, if the plant is identified as a weed the processing unit can have a list of weeds and their associated attractiveness to different insects and at different times of years. Thus, this information can be used to determine if a weed should be sprayed with an insecticide if it is attractive to detrimental insects.

In an example, the processing unit is configured to analyse the at least one image to determine a location of the plant in the at least one image.

In other words, an image will have an areal footprint on the ground, and by locating the crop plant or weed in the image, the actual position of the crop plant or weed on the ground can be determined to an accuracy better than the overall footprint of the image. Thus a chemical spray gun carried by the vehicle that acquired and processed the image can be accurately used to spray the crop plant or weed in order to manage the insects in the field more effectively and efficiently. Also, by knowing the position of the crop plant or weed accurately, a different vehicle to that that acquired and processed the image can go though the field and spray the required crop plants and weeds at their locations using its spray gun(s).

In an example, the processing unit is configured to determine a degree of correlation of a location of an insect determined from the sound data at a location with a location of a plant determined from the at least one image.

According to an example, the processing unit is configured to analyse the at least one image to detect at least one insect on the plant.

Thus, insect detection from sound can be augmented from that from imagery. In this way, less expensive cameras can be utilized, because rather than having to make a positive identification of an insect from imagery, a rough determination of for example size of the insect, when combined with sound data for that insect, can be used to result in a definite identification of the type of insect that has been detected. The plant can then be sprayed if the insect is problematic, or left alone if the insect is beneficial.

In an example, the input unit is configured to provide the processing unit with at least one geographical location associated with where the at least one sound data was acquired.

In an example, the input unit can then be configured to provide the processing unit with at least one geographical location associated with where the at least one image was acquired.

Thus sound data and optionally imagery can be acquired by one platform, that could analyse it to determine locations and plants that are to be sprayed, and the locations of those plants can be determined. For example a UAV can fly around a field and acquires and analyses the sound data and optionally imagery. Then the information of the locations of the plants to be sprayed can be used by a second platform, for example a robotic land vehicle that goes to the locations of the plants that have insects that need to be controlled and sprays them.

Thus, by correlating sound data and even an image with the geographical location where it/they was/were acquired, the spray gun or guns can be accurately activated at that location.

In an example, a GPS unit is used to determine the location the sound data/images were acquired.

In an example, an inertial navigation unit is used alone, or in combination with a GPS unit, to determine the location. Thus for example, the inertial navigation unit, comprising for example one or more laser gyroscopes, is calibrated or zeroed at a known location (such as a docking or charging station) and as it moves with a vehicle the movement away from that known location in x, y, and z coordinates can be determined, from which the location of the vehicle where sound date/ images were acquired can be determined.

In an example, analysis of the at least one image comprises utilisation of a machine learning algorithm.

In an example, the machine learning algorithm comprises a decision tree algorithm.

In an example, the machine learning algorithm comprises an artificial neural network.

In an example, the machine learning algorithm has been taught on the basis of a plurality of images. In an example, the machine learning algorithm has been taught on the basis of a plurality of images containing imagery of at least one type of weed. In an example, the machine learning algorithm has been taught on the basis of a plurality of images containing imagery of a plurality of weeds. In an example, the machine learning algorithm has been taught on the basis of a plurality of images containing imagery of at least one type of crop plant. In an example, the machine learning algorithm has been taught on the basis of a plurality of images containing imagery of a plurality of crop plants. In an example, the machine learning algorithm has been taught on the basis of a plurality of images containing imagery of at least one type of insect. In an example, the machine learning algorithm has been taught on the basis of a plurality of images containing imagery of a plurality of insects.

The imagery acquired by a camera is at a resolution that enables one type of weed to be differentiated from another type of weed, and at a resolution that enables one type of crop plant to be differentiated from another type of crop plant, and at a resolution that enables not only insects to be detected but enables one type of insect to be differentiated from another type of insect.

Thus a vehicle, such as a UAV, with one or more microphones and a camera can fly around a field and acquire sound data and imagery. The UAV (drone) can have a Global Positioning System (GPS) and this enables the location of acquired sound data and imagery to be determined. The drone can also have inertial navigation systems, based for example on laser gyroscopes. The inertial navigation systems can function alone without a GPS to determine the position of the drone where sound data/imagery was acquired, by determining movement away from a known or a number of known locations, such as a charging station.

The acquired sound data and imagery are passed to the processing unit. Sound data and Image analysis software operates on the processing unit.

The processing unit therefore can run image processing software that comprises a machine learning analyser. Images of specific weeds are acquired, with information also relating to the size of weeds being used. Information relating to a geographical location in the world, where such a weed is to be found and information relating to a time of year when that weed is to be found, including when in flower etc. can be tagged with the imagery. The names of the weeds can also be tagged with the imagery of the weeds. The machine learning analyser, which can be based on an artificial neural network or a decision tree analyser, is then trained on this ground truth acquired imagery. In this way, when a new image of vegetation is presented to the analyser, where such an image can have an associated time stamp such as time of year and a geographical location such as Germany or South Africa tagged to it, the analyser determines the specific type of weed that is in the image through a comparison of imagery of a weed found in the new image with imagery of different weeds it has been trained on, where the size of weeds, and where and when they grow can also be taken into account. The specific location of that weed type on the ground within the environment, and its size, can therefore be determined. The machine learning algorithm, or another machine learning algorithm that runs on the processing unit is similarly trained to identify crop plants and detect insects and identify insect types on the basis of ground truth imagery as described above with respect to weeds.

The processing unit also runs a machine learning algorithm that can also be a trained neural network, to process sound data and the processing unit need not utilize imagery at all. Thus, the processing unit can analyse the sound data to determine if insects are present, and where, and the types of insects in order to make spraying decisions. Those decisions can then be optionally augmented on the basis of associated image analysis that can determine types of plants present and even provide visual confirmation of the type of insect, if imagery has been acquired, such as of the size or colour of the insect etc, without having to make a positive identification from the imagery alone.

Thus, the UAV can fly around a field and acquire sound data and imagery from which a decision can be made to spray a plant or not. This information is then later used by another vehicle, that has a one or more spray guns, to enter the field and spray the plants that have been determined to need to be sprayed, whilst leaving other plants alone.

However, a suitable platform can have the microphones, and if necessary cameras, and also have spraying ability and can acquire sound data and image data and spray location directly in order to control insects.

The processing unit has access to a database containing different weed types, different types of crop plants, and different types of insects. This database has been compiled from experimentally determined data.

The vehicle could be a robotic land vehicle.

Thus, in an example the vehicle for insect control in addition to at least one microphone, a processing unit and an output unit can have a camera that acquires the above discussed imagery. The vehicle can also have a number of spray units to spray an insecticide contained in a reservoir in the vehicle. The vehicle can then activate the spray units to control insects on the basis of analysed sounds, with that determination being augmented by image data is necessary.

Thus, for example a vehicle can travel around a field and use its microphones to detect insects in the field. On the basis of the analyzed sound data insects can be identified and either sprayed with an insecticide or not sprayed. The vehicle also used it camera to acquire data that can be analyzed to determine the type of plant, such as a weed in the field and use this to help in determining if spraying should occur or not. Thus, from the analysis of sound data an absolute identification of an insect may not be possible, where there is a possibility that the insect is a nectar feeding insect such as a bee or an insect that feeds on the leaves of the crop plant. However, from the analysis of the imagery it is established that the plat where the insect is located, that can't actually be seen but can be heard, is a corn flower, then a decision can be made not to spray. This is because bees are attracted by corn flower and the other type of insect is not attracted, and therefore there is a greater probability that the insect is a beneficial bee and spraying is not carried out.

Thus, insects can be controlled and managed in a field, encouraging beneficial insects such as bees, ladybirds whilst controlling pests such as aphids and corn borers.

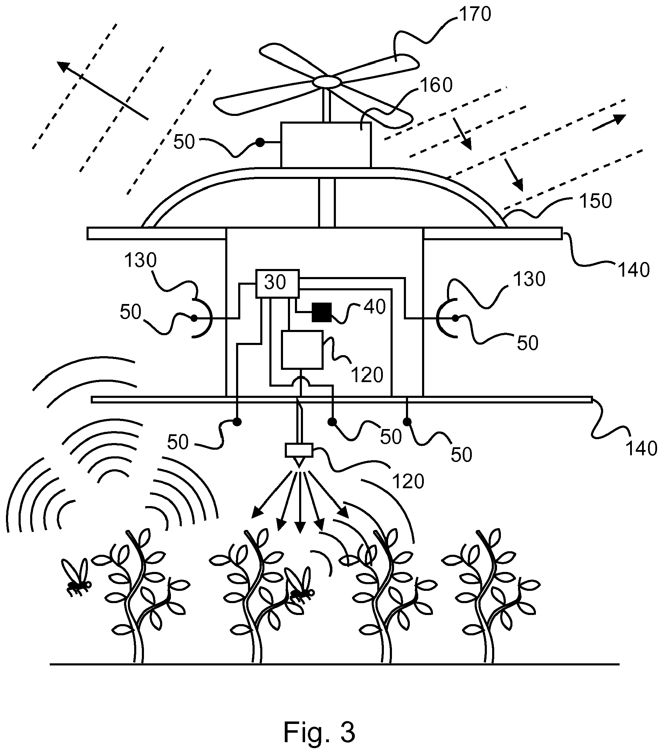

The apparatus, vehicle and method for insect control are now described in more detail with respect to Figs 3-6.

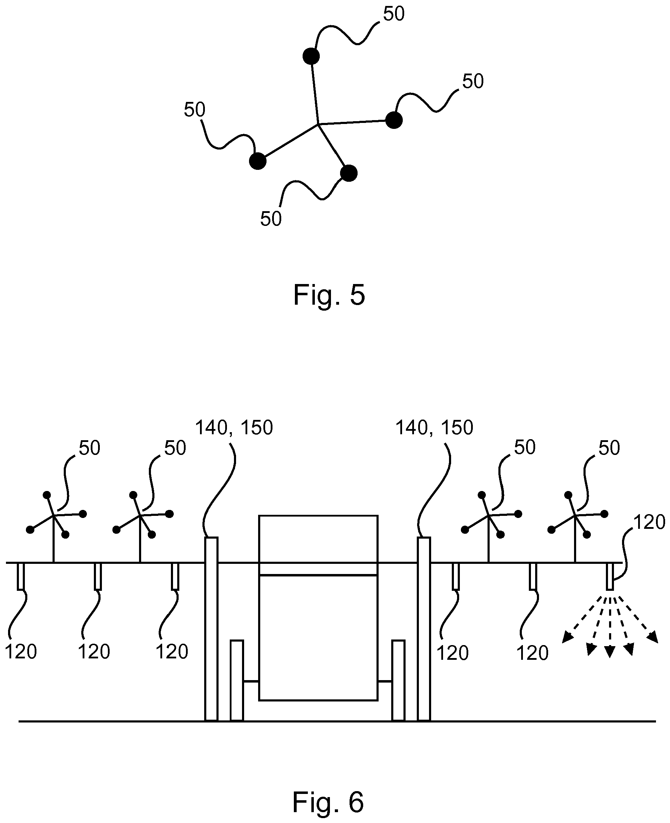

Fig. 3 shows an unmanned aerial vehicle (UAV) flying over a field containing a crop. The crop has a number of insects feeding on the crop plants and a number of beneficial bees in the crop. The UAV has a number of microphones. Some microphones are at the bottom of the UAV, and collect sounds from the crop including sounds from insects. An acoustic damper is above the microphones, and helps to damp out sounds made from the UAV. The UAV also has some microphones at the side of the UAV. These have directional parabolic sound collectors, and serve to collect general noises from the crop and general noises relating to the effects of winds. These microphones are above the above discussed acoustic damper and are below a second acoustic damper and acoustic deflector that are directly below the motor and rotor blades of the UAV, and are thus shielded from insect sounds below the UAV that are detected by the first set of microphones and are shielded from the noise generated by the motor and rotor blades. A third set of microphones is next to the motor and rotor blades, and acquires sound from the motor and rotor blades. A processing unit then runs a noise processing algorithm that takes the sounds from below the UAV, and corrects for wind and general crop sounds from the sideways pointing microphones and corrects for the sounds of the motor and rotor blades, using a noise cancellation algorithm. The sounds are then passed to a trained neural network that has been trained on the basis of sounds from numerous insects, including the sounds from insects that feed on the crop and the sounds of bees. The microphones below the UAV can number 3 or 4 with an example shown in Fig. 5, and are used to triangulated the locations of insects. A spray gun of the UAV is then used to spray the locations where pest insects are located. Triangulation using a number of microphones below the UAV is not essential, because one microphone can be used on the moving platform to locate insects from the amplitude of sound, with spraying being conducted when the sound is at a maximum.

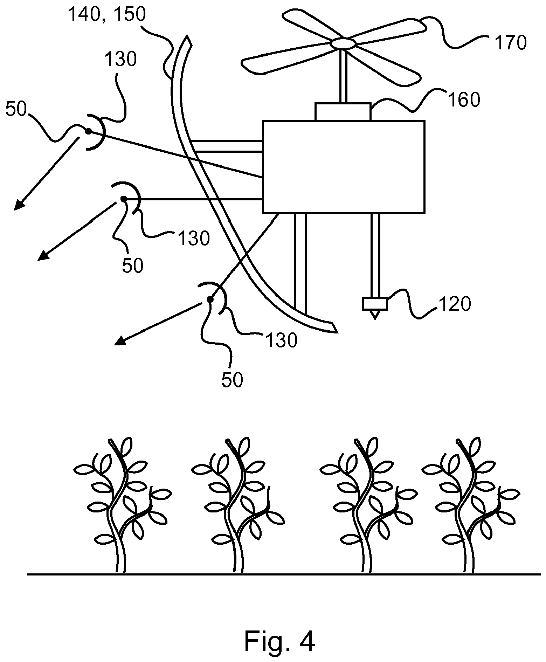

As shown in Fig. 4, to help minimise the sounds of the UAV, the microphones detecting insect sounds can be off to one side of the UAV, and have sound collectors in the form of parabolas. Again sound absorbers and sound reflectors minimise the sound from the UAV collected by the microphones, and these microphones can pinpoint if there are insects located at a position in from of the UAV, which is then sprayed when the UAV reaches that location if the insects are a pest species.

Fig. 5 shows a simple microphone array that can be used to triangulate, with a level of redundancy a location of insects in a crop. As shown in Fig. 6, a land based sprayer has a number of spray units, and each has an associated microphone array. Sound reflectors and absorbers minimise the sound emitted from the wheels and drive system of the vehicle that is collected by the microphones. Again, sound from the moving parts of the vehicle and sounds from the effects of wind can be collected, to improve the sounds from insects using appropriate noise reduction algorithms. Then, when pest insects are identified from the trained neural network, the appropriate spray gun or unit located on the spray boom can be activated.

In another exemplary embodiment, a computer program or computer program element is provided that is characterized by being configured to execute the method steps of the method according to one of the preceding embodiments, on an appropriate apparatus or system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An apparatus (10) for insect control, comprising:
- an input unit (20);
- a processing unit (30); and
- an output unit (40);
wherein, the input unit is configured to provide the processing unit with a plurality of sound data at a corresponding plurality of locations in an environment, wherein the plurality of sound data were acquired by at least one microphone (50);
wherein, the processing unit is configured to determine at least one location of the plurality of locations for the application of an insecticide, the determination comprising utilization of the plurality of sound data; and
wherein, the output unit is configured to output information relating to the at least one location of the plurality of locations.

2. Apparatus according to claim 1, wherein determination of the at least one location comprises analysis of at least some of the plurality of sound data to determine that at least one insect is located at the at least one location of the plurality of locations.

3. Apparatus according to claim 2, wherein determination of the at least one location comprises analysis of the at least some of the plurality of sound data to determine at least one type of insect.

4. Apparatus according to any of claims 2-3, wherein analysis of the at least some of the plurality of sound data comprises utilization of a trained machine learning algorithm.

5. Apparatus according to any of claims 1-4, wherein the at least one microphone comprises at least two microphones.

6. Apparatus according to any of claims 1-5, wherein the at least one microphone comprises at least three microphones.

7. Apparatus according to any of claims 1-6, wherein utilization of the plurality of sound data comprises utilization of a noise reduction algorithm.

8. Apparatus according to claim 7, wherein, the plurality of sound data comprises at least one noise signature of a vehicle, and wherein an input to the noise reduction algorithm comprises the at least one noise signature of the vehicle.

9. Apparatus according to claim 8, wherein the at least one microphone comprises a plurality of microphones, and wherein one or more microphones of the plurality of microphones acquired the at least one noise signature of the vehicle.

10. A vehicle for insect control, comprising:
- at least one microphone (50);
- a processing unit (30); and
- an output unit (40);
wherein, the vehicle is configured to travel to a plurality of locations in an environment;
wherein, the at least one microphone is configured to acquire a plurality of sound data at the plurality of locations;
wherein, the processing unit is configured to determine at least one location of the plurality of locations for the application of an insecticide, the determination comprising utilization of the plurality of sound data; and
wherein, the output unit is configured to output information relating to the at least one location of the plurality of locations.

11. Vehicle according to claim 10, wherein the vehicle comprises a reservoir (110) configured to hold a liquid insecticide and comprises a spray unit (120), and wherein the processing unit is configured to control the spray unit to spray the liquid insecticide at the at least one location.

12. Vehicle according to any of claims 10-11, wherein the vehicle comprises one or more sound collector (130) associated with one or more microphone of the at least one microphone.

13. Vehicle according to any of claims 11-12, wherein the vehicle comprises at least one acoustic damper (140) and/or deflector (150) associated with the at least one microphone.

14. An method for insect control, comprising:
a) providing a plurality of sound data acquired at a corresponding plurality of locations in an environment, wherein the plurality of sound data were acquired by at least one microphone;
b) determining at least one location of the plurality of locations for the application of an insecticide, the determination comprising utilizing the plurality of sound data; and
d) outputting information relating to the at least one location of the plurality of locations.

15. A computer program element for controlling an apparatus according to any of claims 1 to 9 and/or vehicle according to any of claims 10-13, which when executed by a processor is configured to carry out the method of claim 14.
